# EUROPÄISCHE PATENTSCHRIFT

(11) **EP 1 221 390 B1**
(45) Veröffentlichungstag und Bekanntmachung des Hinweises auf die Patenterteilung: **01.03.2006**
(21) Anmeldenummer: 01127613.6
(22) Anmeldetag: 20.11.2001
(51) Int. Cl.: B60H 1/32, B60H 1/00

(54) **Klimaanlage für ein Kraftfahrzeug**
Air conditioning for a motor vehicle
Dispositif de climatisation pour véhicule automobile

(30) Priorität: 05.01.2001 DE 10100252; 15.09.2001 DE 20115273 U; 15.09.2001 DE 10145658; 18.10.2001 DE 10150896
(43) Veröffentlichungstag der Anmeldung: 10.07.2002
(73) Patentinhaber: Behr GmbH & Co. KG, 70469 Stuttgart (DE)
(72) Erfinder: Bureau, Cathy, Dipl.-Ing., 70195 Stuttgart (DE); Burk, Roland, Dipl.-Phys., 70469 Stuttgart (DE); Dürr, Gottfried, Dipl.-Ing., 70176 Stuttgart (DE); Feuerecker, Günter, Dr. rer. nat., 70567 Stuttgart (DE); Molt, Kurt, Dr.-Ing., 74321 Bietigheim-Bissingen (DE); Seewald, Wolfgang, 70190 Stuttgart (DE); Taxis-Reischl, Brigitte, Dr.-Ing., 70499 Stuttgart (DE); Weinbrenner, Marcus, 70499 Stuttgart (DE)
(74) Vertreter: Grauel, Andreas

(56) Entgegenhaltungen:
- EP-A- 0 995 621
- DE-A- 19 857 121
- FR-A- 2 745 894

## Beschreibung

Die Erfindung betrifft eine Klimaanlage für ein Kraftfahrzeug gemäß dem Oberbegriff des Anspruches 1 sowie einen Wärmetauscher, insbesondere Verdampfer gemäß dem Oberbegriff des Anspruches 8.

Es ist ein Ziel der Kraftfahrzeughersteller, den Kraftstoffverbrauch des Fahrzeugs zu reduzieren. Eine Maßnahme zur Reduzierung des Kraftstoffverbrauchs ist das Abschalten des Motors bei vorübergehendem Stillstand, beispielsweise beim Halten an einer Ampel. Dieses vorübergehende Abschalten des Motors wird auch Idle-stop-Betrieb genannt. Diese Maßnahme wird bei heutigen verbrauchsarmen Fahrzeugen, wie beispielsweise bei dem sogenannten Dreiliter-Fahrzeug, bereits eingesetzt. Bei Fahrzeugen, die über den Idle-stop-Betriebsmodus verfügen, ist im innerstädtischen Verkehr ca. 25-30 % der Fahrzeit der Motor ausgeschaltet.

Dies ist ein Grund warum derartige Fahrzeuge nicht mit einer Klimaanlage ausgerüstet sind, denn bei Motorstillstand kann auch ein für eine Klimaanlage notwendiger Kompressor nicht angetrieben werden, so dass im Idle-stop-Betrieb eine Klimaanlage die notwendige Kälteleistung nicht bereitstellen kann.

Zur Lösung dieses Problems ist in der EP 0 995 621 A2 vorgeschlagen, den Verdampfer der Klimaanlage durch das beim Abkühlen von feuchter Luft anfallende Kondensat zu vereisen, so dass im Idle-stop-Betrieb, wenn der Motor abgeschaltet ist, die Luft durch das dann abtauende Eis abkühlbar ist. Dieses Verfahren hat jedoch zahlreiche Nachteile. Die Wassermenge, die in der Luft vorhanden ist und die für die Vereisung des Verdampfers notwendig ist, hängt von den klimatischen Umgebungsbedingungen ab. So kann es vorkommen, dass bei geringer Luftfeuchtigkeit nicht genügend Kondenswasser für die Vereisung zur Verfügung steht. Des weiteren ist zur Vereisung des Verdampfers in der Regel ein relativ großer Zeitraum notwendig, so dass diese bekannte Klimaanlage erst nach einer relativ langen Fahrzeit im ldle-stop-Betrieb arbeiten kann. Ein weiteres Problem ist, das in der Regel der Verdampfer ungleichmäßig vereist, so dass der Verdampfer vereiste und nicht vereiste Bereiche aufweist. Des weiteren kann die Vereisung so stark sein, dass die Luft durch den Verdampfer nicht oder nur mit hohem Druckverlust strömen kann. In jedem Fall erzeugt die Eisschicht einen luftseitigen Druckverlust, was zu einer erhöhten Gebläseleistung führt. Weiter nachteilig ist, dass sich an feuchten Oberflächen Bakterien leicht festsetzen und unangenehme Gerüche verursachen.

Ausgehend von diesem Stand der Technik ist es Aufgabe der Erfindung eine Klimaanlage mit einem Wärmetauscher, insbesondere Verdampfer, bereitzustellen, der auch bei ausgeschaltetem Kompressor Kälteleistung liefert und mit dem weitestmöglich zumindest einzelne der vorgenannten Nachteile vermieden werden. Eine weitere Aufgabe ist es, eine Klimaanlage bereitzustellen, die in allen Betriebs- und Umgebungsbedingungen einschließlich der Idle-stop-Situation, eine Klimatisierung des Fahrzeugs gewährleistet.

Diese Aufgabe wird gelöst durch eine Klimaanlage mit den Merkmalen des Anspruches 1 sowie durch einen Wärmetauscher mit den Merkmalen des Anspruches 8. Vorteilhafte Ausgestaltungen sind Gegenstand der Unteransprüche.

Erfindungsgemäß wird eine Klimaanlage für ein Kraftfahrzeug mit einem Wärmetauscher, insbesondere einem Scheiben- oder Flachrohrverdampfer, vorgesehen, bei der neben einem ersten Kältemittelkreislauf ein zweiter, interner Kältemittelkreislauf (nach dem Heat-Pipe-Prinzip) zumindest bei einem Stillstand des ersten Kältemittelkreislaufs sich ausbildet. Vorzugsweise bildet sich der zweite, interne Kreislauf innerhalb der wärmeübertragenden Rohre, Scheiben oder Leitungen des Scheiben- oder Flachrohrverdampfers aus. Dabei wird der zweite, interne Kältemittelkreislauf vorzugsweise durch die Schwerkraft und/oder durch Kapillarkräfte entsprechend eines Wärmerohres (heatpipe) angetrieben wird.

Vorzugsweise sind im Bereich des Kältespeichermediums Mittel zur Erhöhung der Wärmeleitfähigkeit vorgesehen, wobei es sich insbesondere um Rippenpakete handelt, die zwischen den Leitungen angeordnet sind, und/oder um einen porösen, gut wärmeleitenden Stoff, welcher von dem Kältespeichermedium durchtränkt ist.

Vorzugsweise ist der Kältespeicher, also der das Kältespeichermedium enthaltende Bereich, im oberen Bereich des Wärmetauschers angeordnet und der Wärmetauscher als Verdampfer derart ausgeführt, dass die wärmeübertragenden Rohre nach unten hin abgeschlossen sind, so dass aus dem oberen Bereich des Verdampfers herablaufendes flüssiges Kältemittel den Verdampfer nicht verlassen kann.

Im folgenden wird die Erfindung anhand eines Ausführungsbeispiels unter Bezugnahme auf die Zeichnung im einzelnen erläutert. In der Zeichnung zeigen:
- Fig. 1: eine schematische Ansicht eines Wärmetauschers gemäß dem Ausführungsbeispiel und
- Fig. 2: eine den Betrieb bei stehendem Motor darstellende Schemaskizze.

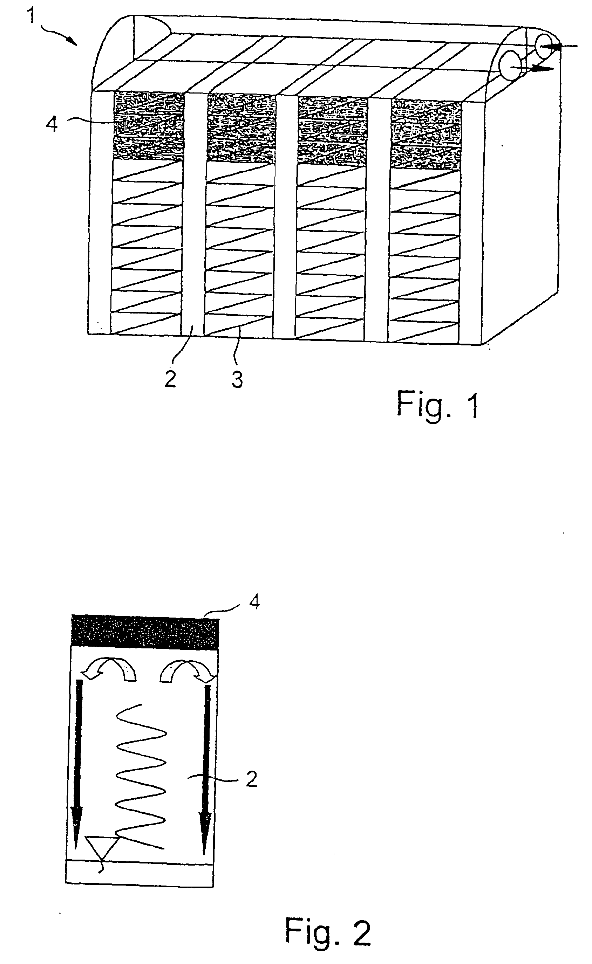

Ein erfindungsgemäßer Wärmetauscher 1, wie er in Fig. 1 schematisch dargestellt ist, ist Teil einer nicht näher dargestellten Klimaanlage mit einem (ersten) Kältemittelkreislauf, welcher einen vom Motor des Kraftfahrzeugs angetriebenen Kompressor, einen Kältemittelkondensator, einen Kältemittelsammler, ein Expansionsventil und besagten Wärmetauscher 1 umfasst, welche durch Leitungen miteinander verbunden sind. Beim Wärmetauscher 1 gemäß dem Ausführungsbeispiel handelt es sich um einen Scheibenverdampfer. Das teilweise flüssige Kältemittel gelangt durch eine Öffnung im oberen Bereich in den Wärmetauscher 1, wie durch den entsprechenden Pfeil angedeutet, und durchströmt den Verdampfer 1 mehrfach, indem es in die Breite und/oder die Tiefe umgelenkt wird, wobei es teilweise oder vollständig verdampft. Wie durch den entsprechenden Pfeil angedeutet, verlässt das Kältemittel den Wärmetauscher 1 durch eine weitere Öffnung als überhitzter Dampf. Zwischen den Leitungen 2 sind Rippenpakete 3 vorgesehen, durch welche die zu kühlende Luft strömt.

Im oberen Bereich des Wärmetauschers 1 ist ein Bereich vorgesehen, in dem angrenzend an die wärmeübertragenden Leitungen 2 ein Kältespeichermedium 4 (Latentkältespeicher) vorgesehen ist. Die Begriffe oben bzw. unten beziehen sich vorteilhaft auf die Ausrichtung in der Einbaulage des Wärmetauschers. Dieser Bereich ist vorzugsweise als zumindest eine. Kammer 5 oder eine Vielzahl von Kammern ausgebildet. Vorzugsweise sind die Kammern zwischen den Leitungen 2 angeordnet, in einem Bereich zwischen den Leitungen, in dem weiter unten auch die Rippenpakete angeordnet sind. Weiterhin ist es zweckmäßig, wenn diese Kammern an die Sammelkästen 6 des Wärmetauschers angrenzen. Dadurch wird eine platzsparende Bauweise des Wärmetauschers erreicht. Das Kältespeichermedium in den Kammern hat vorzugsweise einen Schmelzpunkt von über 0°C, insbesondere über 3°C, wobei es sich vorzugsweise um Decanol oder Tetradecan handelt, wodurch ein Phasenwechsel des Kältespeichermediums 4 oberhalb der Vereisungstemperatur von Wasser ermöglicht wird. Es wird dadurch ermöglicht, das Kältespeichermedium 4 zum Erstarren zu bringen, ohne Gefahr zu laufen, den Verdampfer zu vereisen.

Der Wärmetauscher 1 funktioniert bei Kompressorbetrieb, also bei laufendem Motor, auf herkömmliche Weise, d.h. das Kältemittel wird als expandiertes kaltes Dampf/Flüssigkeitsgemisch dem Wärmetauscher 1 zugeführt, wo es die durch die Rippenpakete durchströmende Luft kühlt, indem es verdampft und auf bekannte Weise im weiteren Verlauf des ersten Kältemittelkreislaufs nach vorheriger Verdichtung wieder kondensiert wird. Das Kältemittel kühlt im Wärmetauscher 1 zusätzlich das Kältespeichermedium 4, so dass dieses abgekühlt wird und vorzugsweise erstarrt.

Wird der Motor beispielsweise an einer Ampel kurzfristig ausgeschaltet (Idle-Stop-Betrieb), so steht der vom Motor angetriebene Kompressor und somit auch der erste Kältemittelkreislauf still, während der Wärmetauscher 1 weiterhin von zu kühlender Luft durchströmt wird, wenn beispielsweise ein von einem Elektromotor angetriebenes Gebläse die Luft durch die Rippenpakete fördert. Aktiv wird in diesem Fall ein interner Kältemittelkreislauf, wie er in Fig. 2 schematisch für eine Scheibe des Wärmetauschers 1 dargestellt ist. Hierbei fließt flüssiges Kältemittel an den Wandungen der entsprechenden Leitung 2 des Kältemittels im Wärmetauscher 1 infolge der Schwerkraft hinunter, verdampft teilweise beim Herabfließen und der flüssige Rest sammelt sich, wie in Fig. 2 unten angedeutet, im unteren Bereich der Leitung 2, von wo aus er ebenfalls zumindest teilweise verdampft. Der schematisch durch eine Wellenlinie angedeutete Kältemitteldampf steigt nach oben. Da der erste Kältemittelkreislauf steht, kann das dampfförmige Kältemittel nicht abgeführt werden, sondern verweilt im oberen Bereich des Wärmetauschers 1, wo die Leitung 2 an den Bereich oder eine Kammer 5 angrenzt, in dem das Kältespeichermedium 4 enthalten ist. Dieses Kältespeichermedium 4 nimmt nunmehr die Wärme des gasförmigen Kältemittels auf, so dass dieses in diesem Bereich der Leitung 2 wiederum kondensiert und nach unten fließt. Es entsteht somit ein zweiter, durch die Schwerkraft angetriebener interner Kältemittelkreislauf.

Besonders zweckmäßig ist es, wenn die Kammern 5 als vorgefertigte Bauteile in den Zwischenraum zwischen den Leitungen eingeführt wird und mit diesen verbunden wird, damit ein möglichst guter Wärmeübergang zwischen den Kammern und den Leitungen erfolgen kann. Auch könnten diese Kammern mit den Sammelkästen einteilig verbunden sein oder mit diesen zumindest teilweise einstückig ausgebildet sein. Zur Befüllung der Kammern 5 weisen diese eine Befüllöffnung auf. Auch kann eine zentrale Befüllung aller Kammern mit einem Kältespeichermedium über eine Befüllleitung erfolgen. Die im Anschluß an die Befüllung verschlossen wird.

Dieser zweite interne Kreislauf kann auch - beispielsweise bei einem Flachrohrverdampfer - wie bei einem Wärmerohr (heatpipe) durch Kapillarkräfte angetrieben oder zumindest unterstützt werden, indem die Innenflächen der Leitungen mit entsprechenden Kapillarstrukturen (nicht dargestellt) versehen werden. Diese Kapillarstrukturen dienen auch dazu die Benetzung der wärmeübertragenden Rohre mit Kältemittelflüssigkeit zu verbessern.

Der Kältespeicher ist vorteilhaft so dimensioniert, dass er für eine Kühlungsdauer von ca. 30 bis 300 Sekunden, vorzugsweise von ca. 60 bis 90 Sekunden ausreicht, so dass die Klimaanlage auch bei einem kurzen Motorstillstand funktioniert und die Kühlleistung erhalten bleibt. Bei einem anderen Ausführungsbeispiel können jedoch auch andere Kühlkapazitäten Verwendung finden, die über 300 Sekunden hinaus gehen.

## Patentansprüche

1. Klimaanlage für ein Kraftfahrzeug mit einem Wärmetauscher (1), durch welchen ein Kältemittel strömt, das in einem Kältekreislauf umläuft und im Wärmetauscher ein Kältespeicher mit einem Kältespeichermedium (4) vorgesehen ist, **dadurch gekennzeichnet, dass** im Wärmetauscher (1) bei einem Stillstand des ersten Kältemittelkreislaufs ein zweiter, interner Kälte-mittelkreislauf besteht.

2. Klimaanlage nach Anspruch 1, **dadurch gekennzeichnet, dass** der zweite, interne Kreislauf innerhalb der wärmeübertragenden Rohre, Scheiben oder Leitungen (2) des Kältemittels angeordnet ist.

3. Klimaanlage nach einem der vorstehenden Ansprüche, **dadurch gekennzeichnet, dass** der zweite interne Kreislauf durch Schwerkraft und oder durch Kapillarkräfte angetrieben wird.

4. Klimaanlage nach einem der vorhergehenden Ansprüche, **dadurch gekennzeichnet, dass** das Kältespeichermedium (4) einen Schmelzpunkt von über 0°C, insbesondere über 3°C aufweist.

5. Klimaanlage nach einem der vorhergehenden Ansprüche, **dadurch gekennzeichnet, dass** das Kältespeichermedium (4) Decanol oder Tetradecan ist oder enthält.

6. Klimaanlage nach einem der vorhergehenden Ansprüche, **dadurch gekennzeichnet, dass** Mittel zur Erhöhung der Wärmeleitfähigkeit im Bereich des Kältespeichermediums (4) vorgesehen sind.

7. Klimaanlage nach Anspruch 6, **dadurch gekennzeichnet, dass** als Mittel zur Erhöhung der Wärmeleitfähigkeit zwischen den Leitungen (2) Rippen (3) und/oder ein poröses Medium vorgesehen sind.

8. Wärmetauscher für eine Klimaanlage eines Kraftfahrzeuges gemäß einem der vorhergehenden Ansprüche, **dadurch gekennzeichnet, dass** der Kältespeicher im oberen Bereich des Wärmetauschers (1) angeordnet ist.

9. Wärmetauscher nach Anspruch 8, **dadurch gekennzeichnet, dass** der obere, das Kältespeichermedium enthaltende Bereich in Kombination mit einem herkömmlichen Wärmetauscher verwendet wird.

## Claims

1. Air-conditioning unit for a vehicle with a heat-exchanger through which a coolant, that circulates in a coolant circuit, flows, and in which there is a cold storage means, with a cold storage medium (4), in the heat exchanger, **characterized in that** where the first coolant circulation is idle, there is a second internal coolant circulation.

2. Air-conditioning unit in accordance with claim 1, **characterized in that** the second, internal circulation is disposed in the heat-transferring pipes, discs or conduits (2) of the coolant.

3. Air-conditioning unit in accordance with one of the preceding claims, **characterized in that** the second internal circulation is driven by the force due to gravity or by capillary forces.

4. Air-conditioning unit in accordance with one of the preceding claims, **characterized in that** the cold storage medium (4) has a melting point that is above 0°C, particularly one that is above 3°C.

5. Air-conditioning unit in accordance with one of the preceding claims, **characterized in that** the cold storage medium (4) is decanol or tetradecane or contains them.

6. Air-conditioning unit in accordance with one of the above claims, **characterized in that** there are means for increasing the heat-conductivity in the area of the cold-storage medium (4).

7. Air-conditioning unit in accordance with claim 6, **characterized in that** there are ribs (3) and/or a porous medium between the conduits (2) in order to increase heat-conductivity.

8. Air-conditioning unit for a vehicle in accordance with one of the preceding claims, **characterized in that** the cold storage means is disposed in the upper area of the heat-exchanger (1).

9. Air-conditioning unit in accordance with claim 8, **characterized in that** the upper area containing the cold storage medium is used in combination with a conventional heat-exchanger.

## Revendications

1. Système de climatisation pour un véhicule automobile comprenant un échangeur de chaleur (1) à travers lequel s'écoule un agent de refroidissement qui circule dans un circuit de froid, et il est prévu, dans l'échangeur de chaleur, un accumulateur de froid comprenant un milieu accumulateur de froid (4), **caractérisé en ce que**, dans l'échangeur de chaleur (1), en cas d'arrêt du premier circuit d'agent de refroidissement, il existe un second circuit d'agent de refroidissement interne.

2. Système de climatisation selon la revendication 1, **caractérisé en ce que** le second circuit interne est disposé à l'intérieur des tubulures transmettant la chaleur, des vitres ou des conduites (2) de l'agent de refroidissement.

3. Système de climatisation selon l'une quelconque des revendications précédentes, **caractérisé en ce que** le second circuit interne est entraîné par la force de gravité et/ou par des forces capillaires.

4. Système de climatisation selon l'une quelconque des revendications précédentes, **caractérisé en ce que** le milieu accumulateur de froid (4) présente un point de fusion supérieur à 0°C, en particulier supérieur à 3°C.

5. Système de climatisation selon l'une quelconque des revendications précédentes, **caractérisé en ce que** le milieu accumulateur de froid (4) est ou contient du décanol ou du tétradécane.

6. Système de climatisation selon l'une quelconque des revendications précédentes, **caractérisé en ce qu'**il est prévu des moyens permettant d'augmenter la conductivité thermique dans la zone du milieu accumulateur de froid (4).

7. Système de climatisation selon la revendication 6, **caractérisé en ce qu'**il est prévu, comme moyens permettant d'augmenter la conductivité thermique entre les conduites (2), des ailettes (3) et/ou un milieu poreux.

8. Echangeur de chaleur pour un système de climatisation d'un véhicule automobile selon l'une quelconque des revendications précédentes, **caractérisé en ce que** l'accumulateur de froid est disposé dans la zone supérieure de l'échangeur de chaleur (1).

9. Echangeur de chaleur selon la revendication 8, **caractérisé en ce que** la zone supérieure contenant le milieu accumulateur de froid est utilisée de façon combinée avec un échangeur de chaleur de type habituel.
